# EUROPÄISCHE PATENTSCHRIFT

(11) **EP 3 200 327 B1**
(45) Veröffentlichungstag und Bekanntmachung des Hinweises auf die Patenterteilung: **03.06.2020**
(21) Anmeldenummer: 17153168.4
(22) Anmeldetag: 26.01.2017
(51) Int. Cl.: H02K 7/00, H02K 9/16, H02K 9/06, F16D 3/18, B61C 9/48, H02K 1/20, H02K 7/116, F16D 13/76

(54) **LUFTGEKÜHLTE ELEKTRISCHE MASCHINE**
AIR-COOLED ELECTRIC MACHINE
MACHINE ÉLECTRIQUE REFROIDIE PAR AIR

(30) Priorität: 29.01.2016 AT 500512016
(43) Veröffentlichungstag der Anmeldung: 02.08.2017
(73) Patentinhaber: Traktionssysteme Austria GmbH, 2351 Wiener Neudorf (AT)
(72) Erfinder: NEUDORFER, Harald, 2514 Traiskirchen (AT); SAMSTAG, Philipp, 2440 Moosbrunn (AT); STOCKMAYER, Michael, 2500 Baden (AT)
(74) Vertreter: Sonn & Partner Patentanwälte

(56) Entgegenhaltungen:
- AT-B- 154 719
- CH-A- 444 949
- DE-A1- 2 548 058
- US-A- 3 622 821
- US-A1- 2004 150 270
- US-A1- 2008 042 502

## Beschreibung

Die Erfindung betrifft eine luftgekühlte elektrische Maschine nach dem Oberbegriff des Anspruchs 1.

Üblicherweise befindet sich bei luftgekühlten elektrischen Maschinen an der Nichtantriebsseite der Maschine ein Lüfter, der mit der Rotorwelle drehfest verbunden ist, um im Betrieb der elektrischen Maschine Kühlluft durch axial angeordnete Kühlkanäle im Stator und allenfalls Rotor zu leiten und die entstandene Wärme abzuführen. Beispielsweise beschreibt die AT 508 879 B1 eine derartige luftgekühlte elektrische Maschine mit einem nichtantriebsseitig angeordneten Lüfter.

Durch den an der Nichtantriebsseite angeordneten Lüfter wird die axiale Länge des Antriebs vergrößert, wodurch der Platzbedarf für die elektrische Maschine steigt. Darüber hinaus ist die Kühlwirkung bei einer elektrischen Maschine mit nichtantriebsseitig angeordnetem Lüfter an der Antriebsseite verschlechtert.

Elektrische Maschinen mit Gehäusen und an der Rotorwelle angeordneten Ventilatoren sind beispielsweise aus der CH 444 949 A, DE 25 48 058 A1, der US 2004/0150270 A1 oder der AT 154 719 B bekannt geworden. Die allfällige Kupplung zur lösbaren Verbindung der Rotorwelle mit einem Getriebe oder dgl. ist dabei oft außerhalb des Gehäuses der elektrischen Maschine angeordnet, wodurch die axiale Baulänge vergrößert wird.

Das Dokument US 2008/0042502 A1 offenbart eine luftgekühlte elektrische Maschine mit einem Lüfter, welcher vom Maschinengehäuse umgeben ist.

Die Aufgabe der vorliegenden Erfindung besteht daher in der Schaffung einer oben genannten luftgekühlten elektrischen Maschine mit geringerem Platzbedarf bzw. höherer Leistung bei gleicher Baugröße und zumindest gleicher Kühlwirkung gegenüber herkömmlichen elektrischen Maschinen.

Gelöst wird die erfindungsgemäße Aufgabe durch eine luftgekühlte elektrische Maschine gemäß Anspruch 1. Durch die erfindungsgemäße Anordnung des Lüfters an der Antriebsseite der Maschine am maschinenseitigen Kupplungsteil und Integration in der Kupplung kann die axiale Länge der elektrischen Maschine reduziert werden bzw. die Leistung der elektrischen Maschine bei gleicher Baugröße gegenüber herkömmlichen luftgekühlten elektrischen Maschinen erhöht werden. Dadurch, dass die Rotorwelle gegenüber herkömmlichen elektrischen Maschinen kürzer ausgeführt werden kann, resultiert auch eine entsprechende Massenreduktion. Durch den antriebsseitig angeordneten Lüfter ist die Kühlwirkung des Lagers an der Antriebsseite der elektrischen Maschine gegenüber der Kühlwirkung an der Nichtantriebsseite verbessert. Derartige platzsparende luftgekühlte elektrische Maschinen eignen sich insbesondere für die Anwendung als Antriebsmaschine bei Schienenfahrzeugen, insbesondere Straßenbahnen. Dadurch, dass die elektrische Maschine von einem Gehäuse umgeben ist, wird die elektrische Maschine vor Verschmutzung geschützt.

Der Lüfter kann am maschinenseitigen Kupplungsteil in diesem Bereich aufgepresst oder über entsprechende Schrauben verbunden werden.

Ebenso kann der Lüfter mit dem maschinenseitigen Kupplungsteil einstückig hergestellt sein. Durch eine derartige Integration des Lüfters in der Kupplung wird der Montageaufwand entsprechend reduziert.

Wenn Elemente zum Leiten der Kühlluft vorgesehen sind, kann die Kühlwirkung weiter verbessert werden, indem die Kühlluft gezielt über die zu kühlenden Bereiche der elektrischen Maschine geleitet wird.

Gemäß einem Merkmal der Erfindung sind Leitelemente im Bereich des Lufteinlasses angeordnet. Durch derartige Luftleitelemente im Bereich des Lufteinlasses kann die Kühlluft gezielt dem antriebsseitig angeordneten Lüfter zugeführt werden, wodurch Turbulenzen vermieden und die Effizienz der Kühlung verbessert werden kann.

Die Leitelemente können einstückig mit dem antriebsseitigen Lagerschild hergestellt sein, wodurch der Montageaufwand reduziert werden kann.

Am nichtantriebsseitigen Lagerschild können Kühlrippen angeordnet sein. Somit kann auch an der Nichtantriebsseite der elektrischen Maschine eine verbesserte Kühlwirkung erzielt werden.

Gegebenenfalls ist am getriebeseitigen Kupplungsteil ein weiterer Lüfter zum Kühlen des Getriebes angeordnet. Auch dieser weitere Lüfter kann auf dem getriebeseitigen Kupplungsteil oder der Rotorwelle aufgepresst oder mit entsprechenden Schrauben verbunden sein. Darüber hinaus ist auch eine einstückige Herstellung des getriebeseitigen Kupplungsteils mit dem weiteren Lüfter möglich.

Zum Verhindern des Ansaugens schmutziger Kühlluft können an den Lufteinlässen mechanische oder auch magnetische Filter angeordnet sein, welche Partikel aus der Kühlluft entfernen und ein Anlagern in den Kühlkanälen der elektrischen Maschine verhindern.

Der Stator kann im Bereich der axialen Kühlkanäle Kühlrippen aufweisen. Durch derartig gestaltete Kühlrippen, welche auch im oben genannten Gehäuse integriert sein können, wird das Abführen der Wärme weiter verbessert.

Der Lüfter und allenfalls der weitere Lüfter kann durch einen Radiallüfter gebildet sein. Derartige Radiallüfter sind für den gegenständlichen Anwendungsfall, bei dem die Kühlluft axial durch die Lufteinlässe eintritt und danach radial in Richtung der im Stator angeordneten Kanäle weitergeführt wird, besonders vorteilhaft. Alternativ dazu ist jedoch auch die Anwendung von Axiallüftern denkbar.

Der Lüfter und allenfalls der weitere Lüfter kann aus Stahl oder Aluminium oder einer Aluminiumlegierung gebildet werden. Die Verwendung von Metallen ist hinsichtlich der mechanischen Robustheit vorzuziehen, wobei Aluminium oder Aluminiumlegierung im Bezug auf das Gewicht Stahl vorzuziehen ist. Unter der Voraussetzung entsprechender Temperaturbeständigkeit sind auch Materialvarianten auf Kunststoffbasis beziehungsweise Verbundwerkstoffe auf Kunststoffbasis, welche Temperaturen über 100° Celsius standhalten, für die Herstellung der Lüfter denkbar. Idealerweise werden die Lüfter durch Gießen hergestellt.

Gemäß einem weiteren Merkmal der Erfindung weist der Lüfter und allenfalls der weitere Lüfter gekrümmte Schaufeln auf. Eine derartige Ausführungsvariante ist bei elektrischen Maschinen mit nur einer Drehrichtung von Vorteil. Wird die elektrische Maschine in beiden Drehrichtungen verwendet, werden gerade Schaufeln vorzuziehen sein, um bei beiden Drehrichtungen eine entsprechende Kühlwirkung erzielen zu können.

Der Lüfter und bzw. oder der weitere Lüfter, kann eine Nut für den Einsatz von Wuchtgewichten aufweisen.

Vorteilhafterweise sind der Lüfter und der maschinenseitige Kupplungsteil der Kupplung sowie der weitere Lüfter und der getriebeseitige Kupplungsteil der Kupplung gemeinsam gewuchtet. Durch diese Maßnahme können Schwingungen der elektrischen Maschine und in der Folge auch Geräuschentwicklungen reduziert werden. Zu diesem Zweck können der Lüfter und allenfalls der weitere Lüfter eine entsprechende Nut für den Einsatz von Wuchtgewichten aufweisen.

Die Kupplung kann beispielsweise durch eine Bogenzahn-Kupplung gebildet sein. Bei einer Bogenzahn-Kupplung wird der maschinenseitige Kupplungsteil und der getriebeseitige Kupplungsteil durch ineinandergreifende Verzahnung lösbar miteinander verbunden. Andere Ausführungsvarianten von Kupplungen sind natürlich ebenfalls denkbar (beispielsweise Membrankupplungen, Ganzstahlkupplungen, stirnverzahnte Kupplungen, Klauenkupplungen, elastische Bolzenkupplungen, elastische Zahnkranzkupplungen, Hohlwellenkupplungen, Keilpaketkupplungen). Die Kupplungen können stromisoliert ausgeführt werden. Weiters können die Kupplungen mit einen Rutschelement ausgestattet werden.

An der Antriebsseite ist zwischen Lagerschild und maschinenseitigem Kupplungsteil vorzugsweise eine Labyrinthdichtung angeordnet. Durch eine derartige Labyrinthdichtung kann eine berührungsfreie Abdichtung der rotierenden Rotorwelle gegenüber den stehenden Teilen der elektrischen Maschine erreicht werden. Je nach Ausführungsform können entsprechend viele Labyrinthstufen in der Labyrinthdichtung vorgesehen sein. Die rotierende Labyrinthdichtung kann wie folgt ausgeführt werden:
- die Labyrinthstufen werden in einem eigenen Bauteil integriert, welches auf der Rotorwelle montiert ist;
- die Labyrinthstufen als Teil des maschinenseitigen Kupplungsteils;
- die Labyrinthstufen als Teil des Lüfters.

Die Erfindung wird anhand der beigefügten Zeichnungen näher erläutert. Darin zeigen:
Fig. 1 eine teilweise geschnittene Ausführungsform einer erfindungsgemäß ausgebildeten luftgekühlten elektrischen Maschine;
Fig. 2 eine Variante gegenüber Fig. 1, bei der der Lüfter über Schrauben mit dem maschinenseitigen Kupplungsteil verbunden ist;
Fig. 3 eine Variante eines Lüfters, der einstückig mit dem maschinenseitigen Kupplungsteil hergestellt ist;
Fig. 4 optional angeordnete Leitelemente im Bereich des Lufteinlasses und antriebsseitigen Lagerschilds;
Fig. 5 eine Ansicht auf eine luftgekühlte elektrische Maschine mit einem weiteren Lüfter zum Kühlen des Getriebes;
Fig. 6 und 7 eine Ausführungsform der luftgekühlten elektrischen Maschine mit Kühlrippen am Stator in Draufsicht und Seitenansicht;
Fig. 8 eine Ausführungsvariante einer elektrischen Maschine mit zwei antriebsseitig angeordneten Lüftern;
Fig. 9 ein Schnittbild entlang der Schnittlinie IX-IX der Fig. 8; und
Fig. 10 eine geschnittene Teilansicht der Antriebsseite einer luftgekühlten elektrischen Maschine der gegenständlichen Art mit einer Labyrinthdichtung im Bereich des antriebsseitigen Lagerschilds.

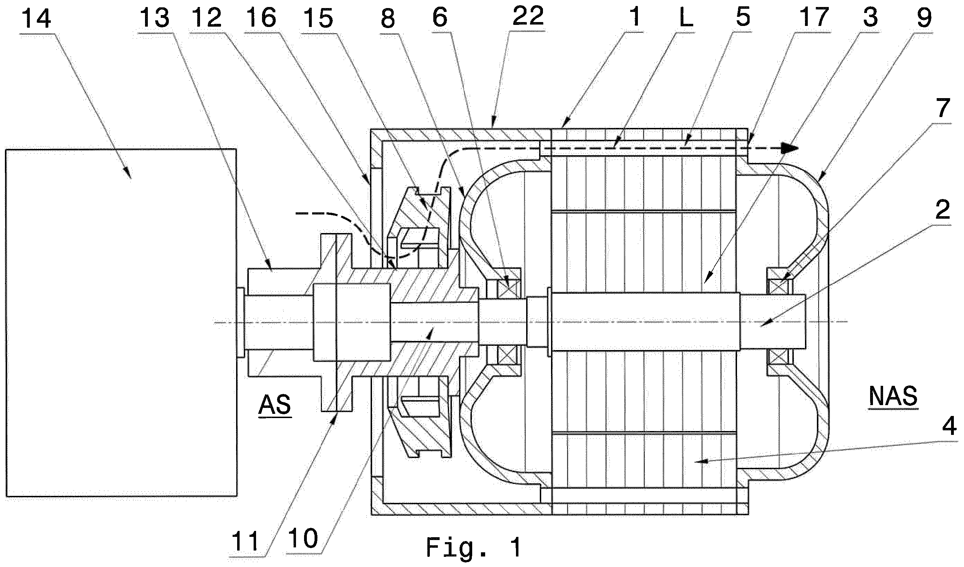

Fig. 1 zeigt eine luftgekühlte elektrische Maschine 1 der gegenständlichen Art in teilweise geschnittener Form. Die elektrische Maschine 1 zeigt einen mit einer Rotorwelle 2 drehfest verbundenen Rotor 3, einen Stator 4 mit darin angeordneten axialen Kühlkanälen 5 und einem an der Antriebsseite AS angeordneten Lagerschild 8 mit einem darin enthaltenen Lager 6 zur drehbaren Aufnahme der Rotorwelle 2 und einem an der Nichtantriebsseite NAS der Maschine 1 angeordneten Lagerschild 9 mit dem Lager 7 zur drehbaren Aufnahme der Rotorwelle 2. Am antriebsseitigen Ende 10 der Rotorwelle 2 ist eine Kupplung 11 zur Verbindung mit einem entsprechenden Getriebe 14 vorgesehen. Die Kupplung 11 beinhaltet einen maschinenseitigen Kupplungsteil 12 und einen getriebeseitigen Kupplungsteil 13, welche beispielsweise über entsprechende Verzahnungen, wie z.B. bei einer Bogenzahn-Kupplung, lösbar miteinander verbunden sind. Mit der Rotorwelle 2 ist ein Lüfter 15 zur Führung der Kühlluft L durch die axialen Kühlkanäle 5 verbunden. Erfindungsgemäß ist der Lüfter 15 an der Antriebsseite AS der Maschine 1 angeordnet und in der Kupplung 11 integriert. Die Kühlluft L gelangt durch die Lufteinlässe 16 an der Antriebsseite AS der elektrischen Maschine 1 durch die axialen Kühlkanäle 5 im Stator 4 zu entsprechenden Luftauslässen 17 an der Nichtantriebsseite NAS der elektrischen Maschine 1. Durch die Integration des Lüfters 15 in der Kupplung 11 wird die axiale Baulänge der elektrischen Maschine 1 durch den Lüfter 15 nicht erhöht, weshalb kleinere elektrische Maschinen 1 bei gleicher Leistung oder baugleiche elektrische Maschinen 1 mit höherer Leistung gegenüber herkömmlichen elektrischen Maschinen 1 hergestellt werden können. Der Lüfter 15 ist am maschinenseitigen Kupplungsteil 12 angeordnet, beispielsweise aufgepresst. Der Bereich des Lüfters 15 ist von einem Gehäuse 22 umgeben, wodurch der Bereich des Lüfters 15 vor Verschmutzung geschützt wird. Zum Verhindern des Ansaugens schmutziger Kühlluft können an den Lufteinlässen 16 mechanische oder auch magnetische Filter angeordnet sein, welche Partikel aus der Kühlluft entfernen und ein Anlagern in den Kühlkanälen der elektrischen Maschine 1 verhindern.

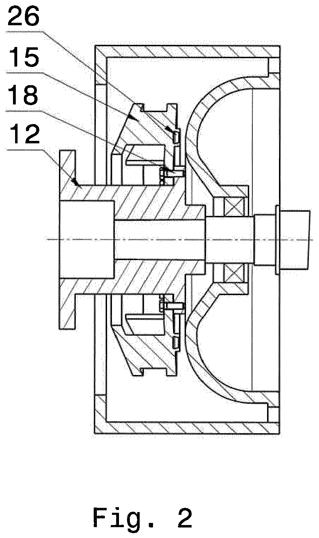

Fig. 2 zeigt eine Variante, bei der der Lüfter 15 über entsprechende Schrauben 18 am maschinenseitigen Kupplungsteil 12 angeordnet ist. Weiters kann der Lüfter 15 eine Nut 26 für den Einsatz von Wuchtgewichten aufweisen.

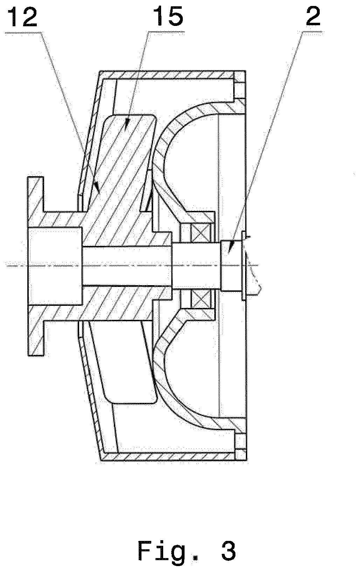

Weiters ist, wie in Fig. 3 dargestellt, eine einstückige Herstellung des Lüfters 15 mit dem maschinenseitigen Kupplungsteil 12 denkbar.

Der Lüfter 15 ist vorzugsweise aus Stahl oder Aluminium oder einer Aluminiumlegierung gebildet und wird allenfalls zusammen mit dem maschinenseitigen Kupplungsteil 12, vorzugsweise durch Gießen, hergestellt.

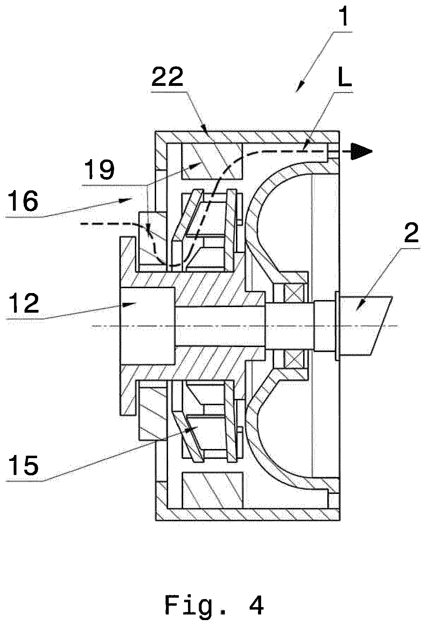

Fig. 4 zeigt einen Teil einer luftgekühlten elektrischen Maschine 1 in geschnittener Darstellung, wobei Elemente 19 zum Leiten der Kühlluft L im Bereich des Lufteinlasses 16 und an der Innenseite des Gehäuses 22 angeordnet sind. Vorzugsweise sind die Leitelemente 19 einstückig mit dem Gehäuse oder antriebsseitigen Lagerschild 8 hergestellt.

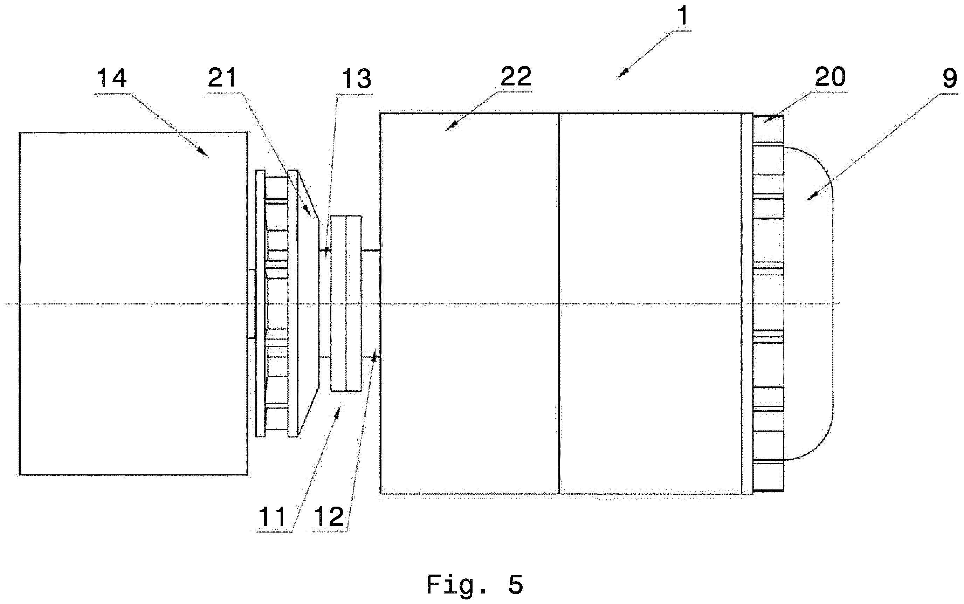

Bei der Ausführungsvariante einer luftgekühlten elektrischen Maschine 1 gemäß Fig. 5 ist ein weiterer Lüfter 21 zum Kühlen des Getriebes 14 am getriebeseitigen Kupplungsteil 13 angeordnet. Dieser weitere Lüfter 21 kann wiederum auf dem getriebeseitigen Kupplungsteil 13 aufgepresst oder durch entsprechende Schrauben (nicht dargestellt) verbunden sein. Auch eine einstückige Herstellung des getriebeseitigen Kupplungsteils 13 mit dem Lüfter 21, vorzugsweise aus Stahl, Aluminium oder einer Aluminiumlegierung, ist möglich. Am nichtantriebsseitigen Lagerschild 9 und bzw. oder Gehäuse 22 der luftgekühlten elektrischen Maschine 1 können Kühlrippen 20 zur Verbesserung der Kühlwirkung vorgesehen sein.

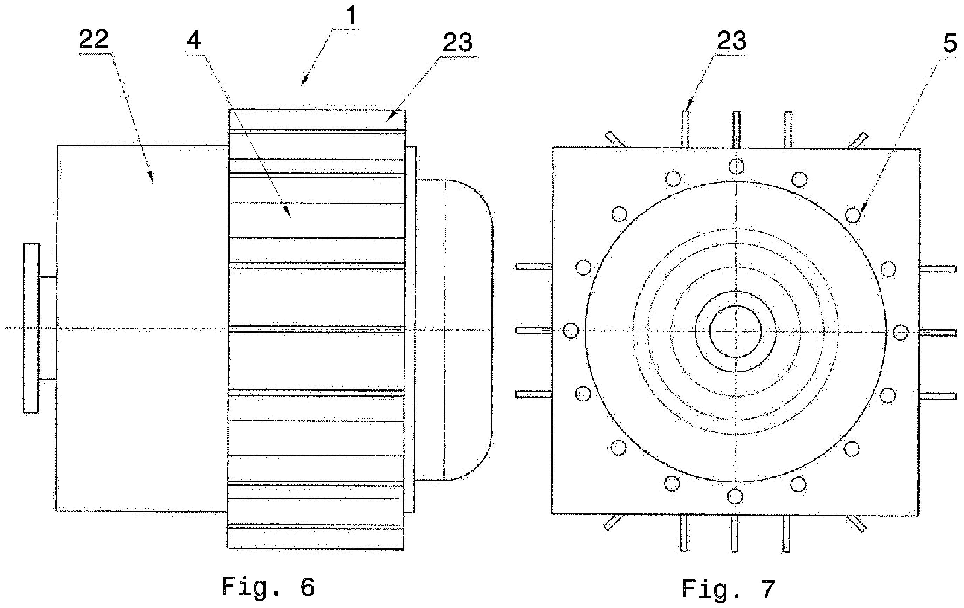

Fig. 6 und 7 zeigen eine weitere Ausführungsvariante einer elektrischen Maschine 1, wobei am Gehäuse 22 im Bereich der axialen Kühlkanäle 5 des Stators 4 zusätzliche Kühlrippen 23 angeordnet sind. Diese Kühlrippen 23 werden vorzugsweise in einem Gussvorgang mit dem Gehäuse 22 der elektrischen Maschine 1 hergestellt.

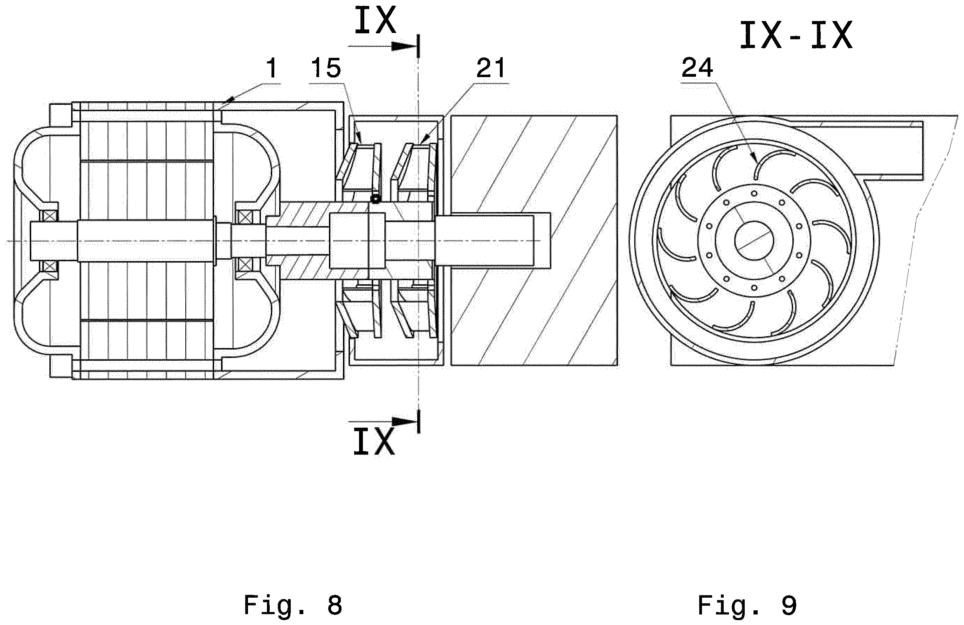

Fig. 8 zeigt eine weitere Ausführungsform einer luftgekühlten elektrischen Maschine 1 mit zwei antriebsseitig AS angeordneten Lüftern 15, 21. Wie dem Schnittbild entlang der Schnittlinie IX-IX in Fig. 9 durch den weiteren Lüfter 21 entnommen werden kann, sind die Schaufeln 24 des weiteren Lüfters 21 gekrümmt ausgebildet, was für elektrische Maschinen 1 mit nur einer Drehrichtung von Vorteil ist.

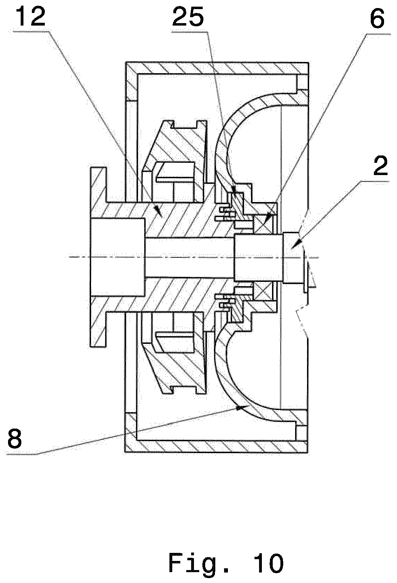

Schließlich zeigt Fig. 10 eine weitere Ausführungsform eines Teils einer elektrischen Maschine 1 im Schnittbild, bei der an der Antriebsseite AS zwischen dem antriebsseitigen Lagerschild 8 und der Rotorwelle 2 bzw. dem motorseitigen Kupplungsteil 12 eine Labyrinthdichtung 25 angeordnet ist. Mit Hilfe des maschinenseitigen Kupplungsteils 12 wird das Lager 6 an der Antriebsseite AS axial fixiert und ein Mitdrehen des Lagerinnenringes verhindert.

## Patentansprüche

1. Luftgekühlte elektrische Maschine (1) mit einem Gehäuse (22), einem mit einer Rotorwelle (2) drehfest verbundenen Rotor (3), einem Stator (4) mit axial angeordneten Kühlkanälen (5), an der Antriebsseite (AS) und Nichtantriebsseite (NAS) der Maschine (1) angeordneten Lagerschilde (8, 9) enthaltend Lager (6, 7) zur drehbaren Aufnahme der Rotorwelle (2), einer am antriebsseitigen Ende (10) der Welle (2) angeordneten Kupplung (11) mit einem maschinenseitigen Kupplungsteil (12) und einem getriebeseitigen Kupplungsteil (13) zur Verbindung mit einem Getriebe (14), und mit einem mit der Rotorwelle (2) verbundenen Lüfter (15) zur Führung der Kühlluft durch die axialen Kühlkanäle (5), wobei die Kupplung (11) auf der dem Getriebe (14) zugewandten Seite des Lagers (6), welches in dem an der Antriebsseite (AS) angeordneten Lagerschild (8) enthalten ist, angeordnet ist, wobei der Lüfter (15) an der Antriebsseite (AS) der Maschine (1) angeordnet und vom Gehäuse (22) umgeben ist, sodass die Kühlluft (L) von einem Lufteinlass (16) des Gehäuses (22) an der Antriebsseite (AS) durch die axialen Kühlkanäle (5) zu einem Luftauslass (17) an der Nichtantriebsseite (NAS) führbar ist, wobei das Gehäuse (22) den an der Antriebsseite (AS) angeordneten Lagerschild (8) umgibt und das getriebeseitige Kupplungsteil (13) außerhalb des Gehäuses (22) angeordnet ist, **dadurch gekennzeichnet, dass** der Lüfter (15) in der Kupplung (11) integriert am maschinenseitigen Kupplungsteil (12) angeordnet ist.

2. Elektrische Maschine (1) nach Anspruch 1, **dadurch gekennzeichnet, dass** der Lüfter (15) mit dem maschinenseitigen Kupplungsteil (12) einstückig hergestellt ist.

3. Elektrische Maschine (1) nach einem der Anspruch 1 oder 2, **dadurch gekennzeichnet, dass** Elemente (19) zum Leiten der Kühlluft (L) vorgesehen sind.

4. Elektrische Maschine (1) nach Anspruch 3, **dadurch gekennzeichnet, dass** Leitelemente (19) im Bereich des Lufteinlasses (16) angeordnet sind.

5. Elektrische Maschine (1) nach Anspruch 3 oder 4, **dadurch gekennzeichnet, dass** Leitelemente (19) einstückig mit dem antriebsseitigen Lagerschild (8) hergestellt sind.

6. Elektrische Maschine (1) nach einem der Ansprüche 1 bis 5, **dadurch gekennzeichnet, dass** am nichtantriebsseitigen Lagerschild (9) Kühlrippen (20) angeordnet sind.

7. Elektrische Maschine (1) nach einem der Ansprüche 1 bis 6, **dadurch gekennzeichnet, dass** am getriebeseitigen Kupplungsteil (13) ein weiterer Lüfter (21) zum Kühlen des Getriebes (14) angeordnet ist.

8. Elektrische Maschine (1) nach einem der Ansprüche 1 bis 7, **dadurch gekennzeichnet, dass** der Stator (4) im Bereich der axialen Kühlkanäle (5) Kühlrippen (23) aufweist.

9. Elektrische Maschine (1) nach einem der Ansprüche 7 oder 8, **dadurch gekennzeichnet, dass** der Lüfter (15) und allenfalls der weitere Lüfter (21) durch einen Radiallüfter gebildet ist.

10. Elektrische Maschine (1) nach einem der Ansprüche 7 bis 9, **dadurch gekennzeichnet, dass** der Lüfter (15) und allenfalls der weitere Lüfter (21) aus Stahl oder Aluminium oder einer Aluminiumlegierung gebildet ist.

11. Elektrische Maschine (1) nach einem der Ansprüche 7 bis 10, **dadurch gekennzeichnet, dass** der Lüfter (15) und allenfalls der weitere Lüfter (21) gekrümmte Schaufeln (24) aufweisen.

12. Elektrische Maschine (1) nach einem der Ansprüche 1 bis 11, **dadurch gekennzeichnet, dass** der Lüfter (15) und bzw. oder der weitere Lüfter (21) eine Nut (26) für den Einsatz von Wuchtgewichten aufweist.

13. Elektrische Maschine (1) nach einem der Ansprüche 1 bis 12, **dadurch gekennzeichnet, dass** die Kupplung (11) durch eine Bogenzahn-Kupplung gebildet ist.

14. Elektrische Maschine (1) nach einem der Ansprüche 1 bis 13, **dadurch gekennzeichnet, dass** an der Antriebsseite (AS) zwischen Lagerschild (8) und maschinenseitigem Kupplungsteil (12) eine Labyrinthdichtung (25) angeordnet ist.

## Claims

1. Air-cooled electric machine (1) comprising a housing (22), a rotor (3) connected to a rotor shaft (2) for conjoint rotation, a stator (4) having axially arranged cooling channels (5), end shields (8, 9) which are arranged on the drive side (AS) and non-drive side (NAS) of the machine (1) and contain bearings (6, 7) for rotatably receiving the rotor shaft (2), a coupling (11) which is arranged on the drive-side end (10) of the shaft (2) and has a machine-side coupling part (12) and a transmission-side coupling part (13) for connection to a transmission (14), and comprising a fan (15) connected to the rotor shaft (2) for guiding the cooling air through the axial cooling channels (5), the coupling (11) being arranged on the side of the bearing (6) that faces the transmission (14), which bearing is contained in the end shield (8) arranged on the drive side (AS), the fan (15) being arranged on the drive side (AS) of the machine (1) and being surrounded by the housing (22) such that the cooling air (L) can be guided from an air inlet (16) of the housing (22) on the drive side (AS) through the axial cooling channels (5) to an air outlet (17) on the non-drive side (NAS), the housing (22) surrounding the end shield (8) arranged on the drive side (AS) and the transmission-side coupling part (13) being arranged outside the housing (22), **characterised in that** the fan (15) is arranged on the machine-side coupling part (12) so as to be integrated in the coupling (11).

2. Electric machine (1) according to claim 1, **characterised in that** the fan (15) is produced in one piece with the machine-side coupling part (12).

3. Electric machine (1) according to either claim 1 or claim 2, **characterised in that** elements (19) for conducting the cooling air (L) are provided.

4. Electric machine (1) according to claim 3, **characterised in that** conducting elements (19) are arranged in the region of the air inlet (16).

5. Electric machine (1) according to either claim 3 or claim 4, **characterised in that** conducting elements (19) are produced in one piece with the drive-side end shield (8).

6. Electric machine (1) according to any of claims 1 to 5, **characterised in that** cooling fins (20) are arranged on the non-drive-side end shield (9).

7. Electric machine (1) according to any of claims 1 to 6, **characterised in that** a further fan (21) for cooling the transmission (14) is arranged on the transmission-side coupling part (13).

8. Electric machine (1) according to any of claims 1 to 7, **characterised in that** the stator (4) has cooling fins (23) in the region of the axial cooling channels (5).

9. Electric machine (1) according to either claim 7 or claim 8, **characterised in that** the fan (15) and possibly the further fan (21) is formed by a radial fan.

10. Electric machine (1) according to any of claims 7 to 9, **characterised in that** the fan (15) and possibly the further fan (21) is made of steel or aluminium or an aluminium alloy.

11. Electric machine (1) according to any of claims 7 to 10, **characterised in that** the fan (15) and possibly the further fan (21) have curved blades (24).

12. Electric machine (1) according to any of claims 1 to 11, **characterised in that** the fan (15) and/or the further fan (21) has a groove (26) for the use of balance weights.

13. Electric machine (1) according to any of claims 1 to 12, **characterised in that** the coupling (11) is formed by a curved-tooth gear coupling.

14. Electric machine (1) according to any of claims 1 to 13, **characterised in that** a labyrinth seal (25) is arranged on the drive side (AS) between the end shield (8) and the machine-side coupling part (12).

## Revendications

1. Machine (1) électrique refroidie par air, avec un carter (22), un rotor (3) raccordé de façon solidaire en rotation à un arbre de rotor (2), un stator (4) avec des canaux de refroidissement (5) disposés axialement, des flasques (8, 9), disposés sur le côté entraînement (AS) et le côté non-entraînement (NAS) de la machine (1), contenant des paliers (6, 7) destinés à la réception rotative de l'arbre de rotor (2), un accouplement (11), disposé à l'extrémité (10) côté entraînement de l'arbre (2), avec une partie d'accouplement (12) côté machine et une partie d'accouplement (13) côté transmission pour le raccordement à une transmission (14), et avec un ventilateur (15) raccordé à l'arbre de rotor (2) pour le guidage de l'air de refroidissement à travers les canaux de refroidissement (5) axiaux, l'accouplement (11) étant disposé sur le côté, tourné vers la transmission (14), du palier (6) qui est contenu dans le flasque (8) disposé sur le côté entraînement (AS), le ventilateur (15) étant disposé sur le côté entraînement (AS) de la machine (1) et entouré par le carter (22) de sorte que l'air de refroidissement (L) peut être guidé à partir d'une entrée d'air (16) du carter (22) sur le côté entraînement (AS) à travers les canaux de refroidissement (5) axiaux vers une sortie d'air (17) sur le côté non-entraînement (NAS), le carter (22) entourant le flasque (8) disposé sur le côté entraînement (AS), et la partie d'accouplement (13) côté transmission étant disposée à l'extérieur du carter (22), **caractérisée en ce que** le ventilateur (15) est disposé sur la partie d'accouplement (12) côté machine en étant intégré dans l'accouplement (11).

2. Machine (1) électrique selon la revendication 1, **caractérisée en ce que** le ventilateur (15) est fabriqué d'un seul tenant avec la partie d'accouplement (12) côté machine.

3. Machine (1) électrique selon l'une des revendications 1 ou 2, **caractérisée en ce qu'**il est prévu des éléments (19) pour diriger l'air de refroidissement (L).

4. Machine (1) électrique selon la revendication 3, **caractérisée en ce que** des éléments directeurs (19) sont disposés dans la zone de l'entrée d'air (16).

5. Machine (1) électrique selon la revendication 3 ou 4, **caractérisée en ce que** des éléments directeurs (19) sont fabriqués d'un seul tenant avec le flasque (8) côté entraînement.

6. Machine (1) électrique selon l'une des revendications 1 à 5, **caractérisée en ce que** des ailettes de refroidissement (20) sont disposées sur le flasque (9) côté non-entraînement.

7. Machine (1) électrique selon l'une des revendications 1 à 6, **caractérisée en ce qu'**un autre ventilateur (21) est disposé sur la partie d'accouplement (13) côté transmission pour le refroidissement de la transmission (14).

8. Machine (1) électrique selon l'une des revendications 1 à 7, **caractérisée en ce que** le stator (4) comporte des ailettes de refroidissement (23) dans la zone des canaux de refroidissement (5) axiaux.

9. Machine (1) électrique selon l'une des revendications 7 ou 8, **caractérisée en ce que** le ventilateur (15) et éventuellement l'autre ventilateur (21) sont formés par un ventilateur radial.

10. Machine (1) électrique selon l'une des revendications 7 à 9, **caractérisée en ce que** le ventilateur (15) et éventuellement l'autre ventilateur (21) sont formés en acier ou en aluminium ou en alliage d'aluminium.

11. Machine (1) électrique selon l'une des revendications 7 à 10, **caractérisée en ce que** le ventilateur (15) et éventuellement l'autre ventilateur (21) comportent des pales (24) courbes.

12. Machine (1) électrique selon l'une des revendications 1 à 11, **caractérisée en ce que** le ventilateur (15) et respectivement ou l'autre ventilateur (21) comporte/comportent une rainure (26) pour la mise en œuvre de poids d'équilibrage.

13. Machine (1) électrique selon l'une des revendications 1 à 12, **caractérisée en ce que** l'accouplement (11) est formé par un accouplement à denture courbe.

14. Machine (1) électrique selon l'une des revendications 1 à 13, **caractérisée en ce que**, sur le côté entraînement (AS), il est disposé un joint labyrinthe (25) entre le flasque (8) et la partie d'accouplement (12) côté machine.
